# EUROPEAN PATENT APPLICATION

(11) **EP 4 779 511 A2**
(43) Date of publication of application: **22.07.2026**
(21) Application number: 26179451.5
(22) Date of filing: 19.05.2026
(51) Int. Cl.: G06F 30/27, B29C 64/386, B29C 64/393, B33Y 50/00, G06T 19/20

(54) **THREE-DIMENSIONAL MODEL PLACEMENT METHOD, THREE-DIMENSIONAL MODEL PRINTING METHOD**

(30) Priority: 14.11.2025 CN 202511676533
(71) Applicant: Shining 3D Tech Co., Ltd., Hangzhou, Zhejiang 311258 (CN)
(72) Inventor: LIU, Zhiyue, Hangzhou, 311258 (CN); JIANG, Tengfei, Hangzhou, 311258 (CN); QIU, Kaijia, Hangzhou, 311258 (CN); ZHEN, Shengxian, Hangzhou, 311258 (CN); JI, Chenghui, Hangzhou, 311258 (CN); GUO, Zhihao, Hangzhou, 311258 (CN)
(74) Representative: Dai, Simin

(57) **Abstract**

Embodiments of the present application provide a three-dimensional model placement and printing method. The method includes: acquiring multiple three-dimensional models; acquiring a first spacing, which is a minimum required spacing in a horizontal direction of a model space between any two three-dimensional models, and performing a first enlargement on a surface of each three-dimensional model in the horizontal direction based on the first spacing; acquiring a second spacing, where the second spacing is a minimum required spacing in a vertical direction of the model space between any two three-dimensional models, and performing a second enlargement on the surface of each three-dimensional model in the vertical direction and an opposite direction based on the second spacing; and adjusting a position of at least one three-dimensional model in the model space based on an collision relationship between the enlarged multiple three-dimensional models.

## Description

### TECHNICAL FIELD

The present application relates to the field of additive manufacturing, and in particular, to a three-dimensional model placement method, a three-dimensional model printing method, and a printing device.

### BACKGROUND

Additive manufacturing (e.g., three-dimensional (3D) printing) provides techniques for manufacturing objects, typically by solidifying portions of a build material at specific locations. Additive manufacturing techniques may include stereolithography apparatus (also referred to as photo-curing), selective or fused deposition modeling, direct composite manufacturing, laminated object manufacturing, selective phase area deposition, multi-phase jet solidification, ballistic particle manufacturing, particle deposition, laser sintering, or combinations thereof.

When using three-dimensional printing technology in a limited model space (or printing space), it is necessary to consider the layout of three-dimensional models within the model space while meeting the requirements of the printing process regarding support structures, optical interference, and model spacing.

### SUMMARY

In a first aspect, an embodiment of the present application provides a three-dimensional model placement method, including:
acquiring multiple three-dimensional models;
acquiring a first spacing, where the first spacing is a minimum required spacing in a horizontal direction of a model space between any two of the multiple three-dimensional models;
performing a first enlargement on a surface of each of the multiple three-dimensional models in the horizontal direction based on an enlargement amount determined by the first spacing;
acquiring a second spacing, where the second spacing is a minimum required spacing in a vertical direction of the model space between any two of the multiple three-dimensional models;
performing a second enlargement on the surface of each of the multiple three-dimensional models in the vertical direction based on an enlargement amount determined by the second spacing; and
adjusting a position of at least one of the multiple three-dimensional models in the model space based on a collision relationship between the enlarged multiple three-dimensional models.

In a possible implementation, the first enlargement is performed based on a half of the first spacing, and the second enlargement is performed based on a half of the second spacing.

In a possible implementation, the model space is defined by a printing space of the multiple three-dimensional models.

In a possible implementation, adjusting the position of at least one of the multiple three-dimensional models in the model space based on the collision relationship between the enlarged multiple three-dimensional models includes:
determining multiple colliding three-dimensional models having a collision relationship; and
adjusting a position of at least one of the multiple colliding three-dimensional models in the model space to eliminate the collision relationship.

In a possible implementation, the method further includes:
acquiring a first placement position of the adjusted multiple three-dimensional models in the model space;
constructing an optimization objective, where the optimization objective includes at least one of minimizing a printing height, maximizing a number of models per unit area, or reducing supports;
determining a constraint condition based on the first spacing and the second spacing; and
optimizing the first placement position using a machine learning model based on the optimization objective and the constraint condition, and outputting a second placement position of the multiple three-dimensional models in the model space.

In a possible implementation, the method further includes:
identifying one or more sensitive regions of the multiple three-dimensional models; and
performing, in the one or more sensitive regions, the first enlargement with a spacing larger than the first spacing and/or the second enlargement with a spacing larger than the second spacing.

In a possible implementation, identifying the one or more sensitive regions of the multiple three-dimensional models includes:
extracting a geometric parameter of the multiple three-dimensional models from mesh data of the multiple three-dimensional models; and
identifying the one or more sensitive regions of the multiple three-dimensional models based on the geometric parameter, where the geometric parameter include at least one of curvature, normal variation rate, or boundary acute angle.

In a possible implementation, identifying the one or more sensitive regions of the multiple three-dimensional models includes:
identifying the sensitive regions of the multiple three-dimensional models using a machine learning model based on mesh data of the multiple three-dimensional models.

In a possible implementation, the second spacing is determined based on a support structure and a layer thickness during printing of the three-dimensional models, and a post-printing demolding force.

In a possible implementation, the first spacing and the second spacing are different.

In a possible implementation, the first spacing is less than the second spacing.

In a possible implementation, the method further includes:
after the adjusting, for each of the multiple three-dimensional models, reversing the first enlargement in the horizontal direction and reversing the second enlargement in the vertical direction.

In a possible implementation, the method further includes: adjusting positions of enlarged three-dimensional models having no collision relationship to be close to positions where the collision relationship exists.

In a second aspect, an embodiment of the present application provides a three-dimensional model printing method, including:
acquiring multiple three-dimensional models;
acquiring a first spacing, wherein the first spacing is a minimum required spacing in a horizontal direction of a model space between any two of the multiple three-dimensional models;
performing a first enlargement on a surface of each of the multiple three-dimensional models in the horizontal direction based on an enlargement amount determined by the first spacing;
acquiring a second spacing, wherein the second spacing is a minimum required spacing in a vertical direction of the model space between any two of the multiple three-dimensional models;
performing a second enlargement on the surface of each of the multiple three-dimensional models in the vertical direction based on an enlargement amount determined by the second spacing;
adjusting a position of at least one of the multiple three-dimensional models in the model space based on a collision relationship between the enlarged multiple three-dimensional models;
generating printing data of the multiple three-dimensional models according to the placement position of the multiple three-dimensional models in the model space; and
performing printing based on the printing data.

In a possible implementation, the method further includes: adjusting positions of enlarged three-dimensional models having no collision relationship to be close to positions where the collision relationship exists.

In a third aspect, an embodiment of the present application provides a printing device, including: a processor; a memory communicatively connected to the processor, the memory storing computer-executable instructions; the processor executing the computer-executable instructions stored in the memory to implement the method according to various possible implementations of the first aspect and/or the second aspect.

In a fourth aspect, an embodiment of the present application provides a computer device, including: a memory and a processor; the memory storing computer-executable instructions; the processor executing the computer-executable instructions stored in the memory to cause the processor to perform the method according to various possible implementations of the first aspect and/or the second aspect.

In a fifth aspect, an embodiment of the present application provides a non-transitory computer-readable storage medium, where the computer-readable storage medium stores computer-executable instructions, and the computer-executable instructions, when executed by a processor, are configured to implement the method according to various possible implementations of the first aspect and/or the second aspect.

The embodiments of the present application provide a three-dimensional model placement method, a three-dimensional model printing method, and a printing device. The method includes: acquiring multiple three-dimensional models; acquiring a first spacing, where the first spacing is a minimum required spacing in a horizontal direction of a model space between any two of the multiple three-dimensional models, and performing a first enlargement on a surface of each of the multiple three-dimensional models in the horizontal direction based on the first spacing; acquiring a second spacing, where the second spacing is a minimum required spacing in a printing direction of the model space between any two of the multiple three-dimensional models, and performing a second enlargement on the surface of each of the multiple three-dimensional models in the printing direction and a direction opposite to the printing direction based on the second spacing; and adjusting a position of at least one of the multiple three-dimensional models in the model space based on an collision relationship between the enlarged multiple three-dimensional models. By enlarging the three-dimensional models based on spacing parameters in the horizontal direction and the printing direction, and then performing placement and collision detection based on the enlarged three-dimensional models, placement based on the contour shapes of the three-dimensional models themselves can be achieved, enabling arrangement in three-dimensional space and improving space utilization. Moreover, by independently setting spacing parameters in the horizontal direction (e.g., XY) and the printing direction (e.g., Z-axis), multi-dimensional differentiated spacing control is achieved, thereby improving space utilization and avoiding interference with support structures.

### BRIEF DESCRIPTION OF DRAWINGS

The accompanying drawings, which are incorporated in and constitute a part of this specification, illustrate embodiments consistent with the present application and together with the description serve to explain the principles of the present application.
FIG. 1 is a first schematic flowchart of a three-dimensional model placement method provided by an exemplary embodiment of the present application.
FIG. 2 is a schematic diagram of relative positions of three-dimensional models in a model space provided by an exemplary embodiment of the present application.
FIG. 3 is a schematic diagram showing placement of three-dimensional models provided by an exemplary embodiment of the present application.
FIG. 4 is a second schematic flowchart of a three-dimensional model placement method provided by an exemplary embodiment of the present application.
FIG. 5 is a third schematic flowchart of a three-dimensional model placement method provided by an exemplary embodiment of the present application.
FIG. 6 is a schematic structural diagram of a computer device provided by an exemplary embodiment of the present application.

### DETAILED DESCRIPTION

Example embodiments will be described in detail herein, examples of which are illustrated in the accompanying drawings. When the following description refers to the accompanying drawings, the same numbers in different drawings represent the same or similar elements unless otherwise indicated. The implementations described in the following example embodiments do not represent all implementations consistent with the present application. Rather, they are merely examples of apparatuses and methods consistent with some aspects of the present application as detailed in the appended claims.

In the description of the present application, the terms "first", "second", etc. are used for descriptive purposes only and are not to be construed as indicating or implying relative importance or implicitly specifying the number of the indicated technical features. Thus, features defined with "first", "second", etc. may explicitly or implicitly include one or more of such features. In the description of the present application, "multiple" means two or more, unless otherwise explicitly and specifically defined.

Additive manufacturing (e.g., three-dimensional (3D) printing) provides techniques for manufacturing objects, typically by solidifying portions of a build material at specific locations. Additive manufacturing techniques may include stereolithography (also referred to as photo-curing), selective or fused deposition modeling, direct composite manufacturing, laminated object manufacturing, selective phase area deposition, multi-phase jet solidification, ballistic particle manufacturing, particle deposition, laser sintering, or combinations thereof.

When using three-dimensional printing technology in a limited model space (or printing space), it is necessary to consider the layout of three-dimensional models within the model space while meeting the special requirements of the printing process regarding support structures, optical interference, and model spacing.

In some examples, smaller three-dimensional printing devices (e.g., some devices referred to as capsule printers) are used to perform fine printing, such as printing small workpieces, crafts, or other suitable models, and manufacturing multiple models in a model (printing) space improves printing efficiency. For example, in digital dental production, 3D printing is widely used for manufacturing restorations such as dental crowns, veneers, and bridges. In some examples, digital light processing (DLP), stereolithography (SLA), or liquid crystal display (LCD) technologies can be used to print the required dental models by projecting light to cure liquid resin layer by layer. Since dental models or other fine workpieces, crafts, etc., often have complex geometric structures and precise assembly requirements, how to efficiently arrange multiple models within the limited model space of a small three-dimensional printing device while meeting the requirements of the printing process regarding support structures, optical interference, and model spacing has become a challenge for improving production efficiency and material utilization.

Placement solutions in related art typically only consider arrangement in the horizontal direction (assuming the printing direction of the models is the vertical direction), failing to fully utilize the model space, resulting in a limited number of three-dimensional models that can be printed. In some solutions, a strategy of placing three-dimensional models layer by layer is adopted, where models are placed layer by layer in the printing direction, and the height of each layer depends on the maximum height of the models placed in that layer. Although this solution achieves three-dimensional space placement, the placement within each layer is still essentially two-dimensional plane placement, so space utilization is improved but not significantly.

In addition, photocuring technologies such as DLP have special requirements for spacing in the printing direction of models: a support structure needs to be added at the bottom of the model during printing, and the spacing requirements in the horizontal direction and the printing direction differ significantly. Therefore, a larger spacing is required in the printing direction to avoid optical interference and the risk of support structure crossing, while the spacing in the horizontal direction needs to be compressed as much as possible to increase arrangement density.

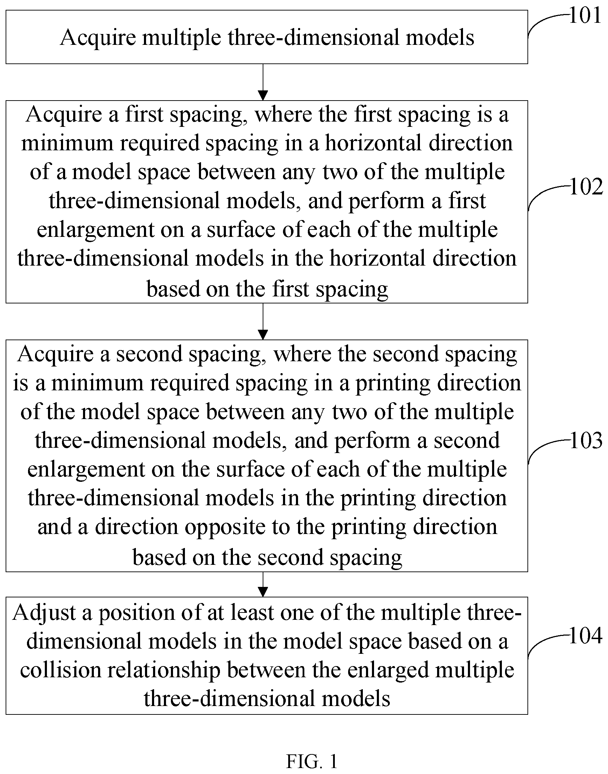

In response to the above technical problems, an embodiment of the present application provides a three-dimensional model placement method. As shown in FIG. 1, the method includes:
step 101: acquiring multiple three-dimensional models;
step 102: acquiring a first spacing, where the first spacing is a minimum required spacing in a horizontal direction of a model space between any two of the multiple three-dimensional models, and performing a first enlargement on a surface of each of the multiple three-dimensional models in the horizontal direction based on the first spacing;
step 103: acquiring a second spacing, where the second spacing is a minimum required spacing in a printing direction of the model space between any two of the multiple three-dimensional models, and performing a second enlargement on the surface of each of the multiple three-dimensional models in the printing direction and a direction opposite to the printing direction based on the second spacing; and
step 104: adjusting a position of at least one of the multiple three-dimensional models in the model space based on an collision relationship between the enlarged multiple three-dimensional models.

The multiple three-dimensional models refer to multiple independent models formed, for example, by photocuring in the same printing task. These models may be identical or different in shape and size, depending on application requirements. In practical application scenarios, such as model printing in the dental field, since restorations (e.g., dental crowns, teeth, etc.) or aligners are typically customized according to the oral conditions of individual patients, the multiple three-dimensional models included in one printing task often have different geometric features to meet the needs of personalized medicine.

The model space refers to a space for placing the multiple three-dimensional models, defining the placement range of the three-dimensional models, representing an available space in a physical printer, and serving as a virtual mapping of an actual printing space. Therefore, the size and shape of the model space are determined by the printing space of the printing device. The size of the model space cannot exceed the size of the actual printing space to ensure that the three-dimensional models placed in the model space can be completely printed by the printer. Based on the shape of the printing space, the shape of the model space may be a cuboid or a cylinder, or may be, for example, adapted according to the three-dimensional models to be printed. In an embodiment, the printing device is a capsule printing device, and its printing space may be cylindrical; therefore, the model space may also be cylindrical.

It can be understood that a capsule printing device or a capsule printer may refer to a printing device that performs printing tasks using a printing capsule containing a printing material, such as a photosensitive polymer material. The printing capsule may be based on the concept of pay-per-use or single-use or multi-use, allowing a user to print objects using a printing capsule containing a predetermined amount of resin or photosensitive polymer material sufficient for the printing or a predetermined number of printings. Each printing capsule may include a readable identification device that can be read by a tracking system of the printing device, and the readable identification device may include an RFID (Radio Frequency Identification) tag, a barcode indicator, a QR (Quick Response) code, an optical reader, or the like, which may facilitate monitoring of the number of printings and the usage of the printing capsule, such as monitoring the remaining amount of resin or photosensitive polymer in the printing capsule.

In some examples, a virtual model space may be constructed based on the printing space, and the multiple three-dimensional models are imported and placed in the model space. Therefore, the model space has a maximum capacity for the number of three-dimensional models that can be placed, which is determined by the size of the model space, the sizes/shapes of the multiple three-dimensional models, the density of placement of the multiple three-dimensional models, and the like. Typically, to ensure proper generation of support structures in the subsequent printing process, when placing the multiple three-dimensional models, the placement may not be performed at the maximum capacity, but with some margin. During actual placement, three-dimensional models may be added while placing to prevent too many three-dimensional models from entering the model space.

It can be understood that the horizontal direction refers to an XY horizontal direction or a layer plane direction perpendicular to the printing direction of the printing device. The first spacing refers to a minimum safe distance that needs to be maintained between models or between a model and an edge of the model space in the horizontal direction. By setting the first spacing, the following principle is followed during placement: the projection, in the horizontal direction, of a shortest line between models or between a model and an edge of the model space is less than the first spacing, which ensures that the multiple three-dimensional models do not collide in the horizontal direction during placement, so that the models do not stick together after printing, and the separation of the models from the build plane does not easily affect other models.

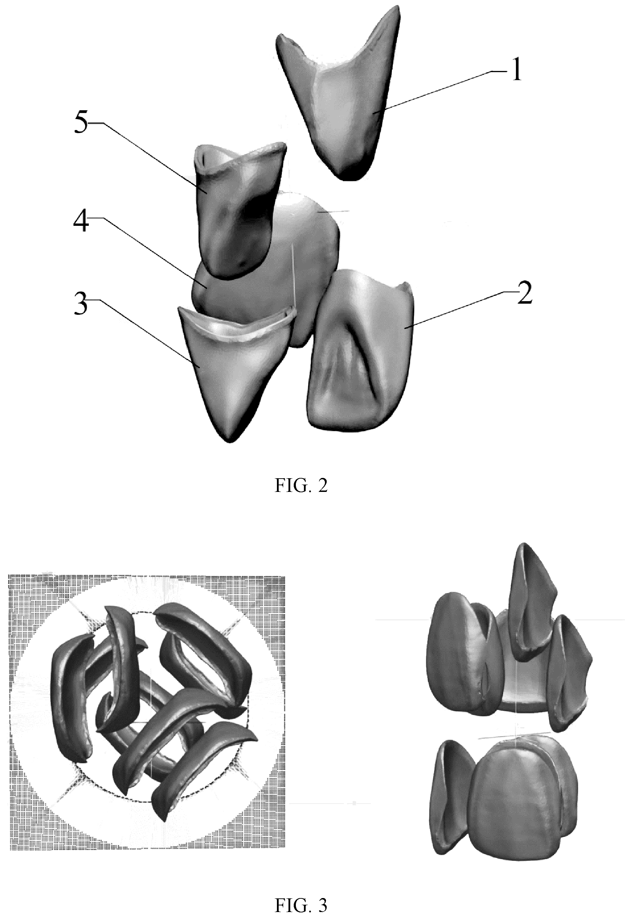

It can be understood that the printing direction refers to a build direction or Z direction. For example, when the printing device, such as a capsule printer, is placed normally on a horizontal surface, the printing direction may be a direction perpendicular to the horizontal surface, such as a direction from the bottom of the capsule printer toward the top of the capsule printer. The second spacing refers to a minimum safe distance that needs to be maintained between models or between a model and an edge of the model space in the printing direction. By setting the second spacing, the following principle is followed during placement: the projection, in the printing direction, of the shortest line between models or between a model and an edge of the model space is less than the second spacing, which ensures that the multiple three-dimensional models do not collide in the printing direction during placement, so that the models do not stick together after printing, and the separation of the models from the build plane does not easily affect other models. In addition, it should be noted that the objects defined by the first spacing (horizontal direction) and the second spacing (printing direction) are any two models that are at risk of collision in spatial positions, such as two adjacent models. For two models that are not adjacent (e.g., separated by at least one other model), it is only necessary to ensure that each of the two models satisfies the requirements of the first spacing and the second spacing with respect to at least one other model. As shown in FIG. 2, model 1 and model 3 are located at diagonal positions. Compared to model 2, model 4, and model 5, model 1 and model 3 are not adjacent models, being separated by model 2, model 4, and model 5. Therefore, when considering spacing constraints, model 3 may not be considered for model 1, and it is only necessary to ensure that model 1 satisfies spacing constraints with model 2, model 4, and model 5, and that model 3 satisfies spacing constraints with model 2, model 4, and model 5; then model 1 and model 3 will also satisfy the spacing requirements.

In some examples, the first spacing and the second spacing are set independently. In some embodiments, since a support structure needs to be added at the bottom of the model during printing, a larger spacing is required in the printing direction to avoid optical interference and the risk of support structure crossing, and the second spacing is set to be greater than the first spacing. When the first spacing and the second spacing are different, an example of placement of the multiple three-dimensional models may be as shown in FIG. 3.

In some examples, the second spacing is determined based on a support structure and a layer thickness during printing of the three-dimensional models, and a post-printing demolding force.

After acquiring the first spacing and the second spacing, a first enlargement is performed on each three-dimensional model in the horizontal direction based on the first spacing, and a second enlargement is performed on each three-dimensional model in the printing direction and the direction opposite to the printing direction based on the second spacing, to obtain enlarged three-dimensional models. The two enlargements are equivalent to adding a buffer layer outside the boundaries of the original three-dimensional models, such that when the enlarged three-dimensional models are just in contact at a certain position during placement, the original three-dimensional models still have the minimum safe distance therebetween.

Taking the enlargement in the horizontal direction as an example, performing the first enlargement on each three-dimensional model in the horizontal direction has two conditions: an enlargement direction and an enlargement amount. The enlargement direction includes the positive direction and the negative direction of the X-axis and the positive direction and the negative direction of the Y-axis, and the enlargement amount is determined by the first spacing, e.g., not less than half of the first spacing. For example, if the first spacing is 4 mm, the surface of each three-dimensional model is offset outward by 2 mm in the horizontal direction. Then, when two enlarged three-dimensional models are just in contact, the actual distance between the two three-dimensional models at the contact point is exactly 4 mm. If the offset distance is less than 2 mm, the actual distance between the two models will be less than 4 mm, which does not satisfy the condition of the first spacing.

Similarly, when performing the second enlargement in the printing direction based on the second spacing, the enlargement direction includes the positive direction and the negative direction of the Z-axis, and the enlargement amount is determined by the second spacing, not less than half of the second spacing.

In an embodiment, the first enlargement is performed based on a half of the first spacing, and the second enlargement is performed based on a half of the second spacing.

After performing the first enlargement and the second enlargement on each three-dimensional model, the enlarged three-dimensional models are obtained. When placing the multiple three-dimensional models, collision detection is performed based on the enlarged three-dimensional models to determine a collision relationship between the enlarged three-dimensional models, and positions of three-dimensional models having the collision relationship are adjusted to eliminate the collision .

In addition, for some enlarged three-dimensional models without the collision relationship, their positions may also be adjusted to save space in the model space, for example, by moving them closer to collision positions to support the introduction of more other three-dimensional models into the model space. It should be noted that during adjustment, collision detection needs to be performed based on the enlarged three-dimensional models.

In this embodiment, the manner for placing the multiple three-dimensional models includes an intersection removal manner and a feasible solution-based manner. The intersection removal manner refers to placing the three-dimensional models one by one into the model space, and each time a three-dimensional model is placed, collision detection is performed between the model and the already placed models based on the enlarged three-dimensional model, i.e., placing them one by one according to each enlarged three-dimensional model. The feasible solution-based manner refers to first placing the multiple three-dimensional models in the model space without considering the collision relationship, and then performing collision detection and adjustment based on the enlarged three-dimensional models corresponding to each three-dimensional model to eliminate collision.

It should be noted that after completing the placement of all three-dimensional models and determining the position of each three-dimensional model in the model space, it is necessary to reverse the enlargements to avoid printing the enlarged three-dimensional models. The reversing process refers to reversing the first enlargement and the second enlargement.

Specifically, after the adjustment, for each of the multiple three-dimensional models, reversing the first enlargement in the horizontal direction and reversing the second enlargement in the printing direction and the direction opposite to the printing direction, i.e., the multiple three-dimensional models are restored to their initial sizes. More specifically, the second enlargement is reversed first and then the first enlargement is reversed, or the first enlargement is reversed first and then the second enlargement is reversed, or the first enlargement and the second enlargement are reversed simultaneously, thereby obtaining the original three-dimensional models.

In the method provided by the above embodiments, multiple three-dimensional models in a model space are acquired; a first spacing is acquired, where the first spacing is a minimum required spacing in a horizontal direction of a model space between any two three-dimensional models, and a first enlargement is performed on a surface of each three-dimensional model in the horizontal direction based on the first spacing; a second spacing is acquired, where the second spacing is a minimum required spacing in a printing direction of the model space between any two three-dimensional models, and a second enlargement is performed on the surface of each three-dimensional model in the printing direction and a direction opposite to the printing direction based on the second spacing; and a position of at least one three-dimensional model in the model space is adjusted based on the collision relationship between the enlarged multiple three-dimensional models. By enlarging the three-dimensional models based on spacing parameters in the horizontal direction and the printing direction, and then performing placement and collision detection based on the enlarged three-dimensional models, placement based on the contour shapes of the three-dimensional models can be achieved, enabling arrangement in three-dimensional space and improving space utilization. Moreover, by independently setting spacing parameters in the horizontal direction (XY) and the printing direction (Z-axis), multi-dimensional differentiated spacing control is achieved, thereby improving space utilization and avoiding interference with support structures.

In an embodiment, adjusting the position of at least one of the multiple three-dimensional models in the model space based on the collision relationship between the enlarged multiple three-dimensional models includes:
determining multiple colliding three-dimensional models having a collision relationship among the enlarged multiple three-dimensional models; and
adjusting a position of at least one of the multiple colliding three-dimensional models in the model space to eliminate the collision relationship.
Having a collision relationship refers to that the enlarged three-dimensional models have at least one point, line, or surface in contact or intersecting.

In this embodiment, all three-dimensional models to be placed may be first placed in the model space, and collision detection is performed to determine whether there is a collision relationship between the enlarged three-dimensional models. If yes, the three-dimensional models having a collision relationship are defined as colliding three-dimensional models. At least one of the multiple colliding three-dimensional models is selected for position adjustment. In the one-by-one placement solution, for the enlarged three-dimensional model being placed, if it is detected based on the enlarged three-dimensional model that there is a collision relationship with the already placed enlarged three-dimensional model(s), the position of the enlarged three-dimensional model being placed may be directly adjusted. If the collision detection requirement is still not satisfied, the positions of other already placed enlarged three-dimensional models may be adjusted.

In the method provided by the above embodiment, collision detection is performed using the enlarged three-dimensional models, and positions of models having a collision relationship are adjusted, which is different from placement based on circumscribed rectangles or cuboids of the three-dimensional models, and can effectively improve space utilization.

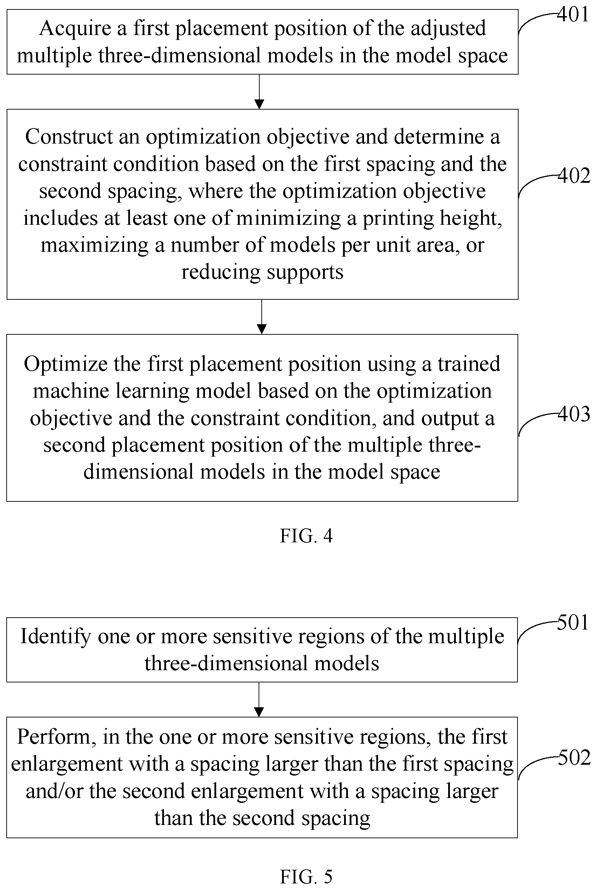

In an embodiment, as shown in FIG. 4, the method further includes:
step 401: acquiring a first placement position of the adjusted multiple three-dimensional models in the model space;
step 402: constructing an optimization objective and determining a constraint condition based on the first spacing and the second spacing, where the optimization objective includes at least one of minimizing a printing height, maximizing a number of models per unit area, or reducing supports; and
step 403: optimizing the first placement position using a trained machine learning model based on the optimization objective and the constraint condition, and outputting a second placement position of the multiple three-dimensional models in the model space.

The first placement position is a placement position determined based on the enlarged three-dimensional models. The first placement position is a position that satisfies the requirement that the distances between the multiple three-dimensional models conform to the first spacing and the second spacing. However, in the model space, there may be multiple possibilities for placing the three-dimensional models. Simply ensuring no collision may result in distances between three-dimensional models being too large, leading to inefficient space utilization.

In three-dimensional printing such as photocuring, models are printed layer by layer. When the layer thickness is fixed, the printing height directly determines the printing duration. The lower the total height of the three-dimensional model placement, the fewer the number of layers and the shorter the total time. At the same time, the lower the height of the three-dimensional model placement, the less resin is typically required. Therefore, the printing height can be used as an optimization objective to optimize the first placement position.

By using the printing height, the number of models per unit area, and the number of supports as targets, an optimization objective such as minimizing the printing height, maximizing the number of models per unit area, and reducing supports is constructed. The placement position is optimized by using a machine learning model to obtain a second placement position that meets the optimization objective. During the optimization process, the first spacing and the second spacing need to serve as constraint conditions to avoid collision or models being too close to each other and affecting each other, as well as affecting the generation of supports.

In some embodiments, after obtaining the enlarged three-dimensional models, it is possible not to acquire the first placement position, but to directly obtain the placement positions of the multiple enlarged three-dimensional models by constructing an optimization objective and determining a constraint condition based on the enlarged three-dimensional models. After determining the placement positions of the enlarged three-dimensional models, reversing the first enlargement and the second enlargement yields the placement positions of the three-dimensional models.

In an embodiment, as shown in FIG. 5, the method further includes:
step 501: identifying one or more sensitive regions of the multiple three-dimensional models; and
step 502: performing, in the one or more sensitive regions, the first enlargement with a spacing larger than the first spacing and/or the second enlargement with a spacing larger than the second spacing.

Sensitive regions refer to specific areas on the three-dimensional models whose shapes need to be considered when placing the three-dimensional models to avoid stacking of models. For example, the seating surface of a dental crown is concave. If the same parameters are used for enlargement, it is highly likely that a portion of one model may be placed into a sensitive region of another model during placement, causing collision or difficulty in separation.

To avoid a protruding portion of one model being exactly inserted into a concave portion of another model during placement, a greater amount of enlargement is applied to these sensitive regions, i.e., increasing the thickness of the buffer layer. In this way, after enlargement, the concave portion will be filled more, making the concavity shallower, thereby reducing the risk of a protruding portion of one model being embedded into a concave portion of another model.

The adjustment of the first spacing and/or the second spacing corresponding to the sensitive regions needs to be specifically adjusted based on the geometric parameters of the sensitive regions. In batch printing, the specific first spacing and/or second spacing may also be determined with reference to the categories of the three-dimensional models to be printed.

The sensitive regions of the three-dimensional models may be identified and classified based on preset rules, may also be determined by manual annotation, or may be determined by first using an algorithm for identification and then using the manual annotation results.

In an embodiment, identifying the one or more sensitive regions of the multiple three-dimensional models includes:
extracting a geometric parameter of the multiple three-dimensional models from mesh data of the multiple three-dimensional models; and
identifying the one or more sensitive regions of the multiple three-dimensional models based on the geometric parameter, where the geometric parameter include at least one of curvature, normal variation rate, or boundary acute angle.

It can be understood that geometric parameters quantitatively describe and measure the geometric properties of the surface of a three-dimensional model. Identifying sensitive regions of a three-dimensional model through geometric analysis primarily involves searching for regions where the geometric properties of the model surface change drastically. For example, curvature characterizes the degree of bending of each defined region on the surface of a three-dimensional model. Through curvature, high-curvature regions on the surface of the three-dimensional model can be found, such as all edge-associated regions and corner-associated regions of a cube, and regions associated with the edge of the top surface of a cylinder. The normal variation rate is used to calculate the difference in the direction of normal vectors of adjacent triangular patches/mesh regions composed of triangular patches in a three-dimensional model, and the boundary acute angle analyzes the internal and external angles of the open boundary of the model. A region with a large normal variation rate typically indicates a rapid curvature change. When identifying sensitive regions using geometric parameters, for example, multiple regions with geometric parameters greater than a corresponding threshold may be identified, and the integrated region portions may be determined through clustering or region connectivity algorithms.

In other examples, more details of the three-dimensional model may also be identified using texture or geometric pattern recognition, such as small holes, grooves, text, or assembly portions. For example, a geometric shape library or texture library may be pre-stored in the 3D printing software, and the local geometric shapes and textures of the three-dimensional model are matched with data in the library for identification. For example, the template for a small hole is a geometric definition of a cylindrical inner wall. By scanning/searching the three-dimensional model for all "inward-facing cylindrical surfaces", once found and matched, including parameters such as the depth and radius of the hole, not only can a region be marked, but a "hole" feature can be identified and its parameters extracted. For another example, for an assembly portion, the stored template may be a threaded hole, a pin hole, a positioning slot, or any template of other regular or irregular assemblies. For example, after the 3D printing software recognizes these features, it can be considered that the regions where these features are located are regions designed for connection and fitting with other parts, and belong to sensitive regions.

In an embodiment, identifying the one or more sensitive regions of the multiple three-dimensional models includes:
identifying the sensitive regions of the multiple three-dimensional models using a trained machine learning model based on mesh data of the multiple three-dimensional models.

For some regions that are not geometrically prominent but are functionally important, it is difficult to define them using geometric parameters. Therefore, intelligent recognition can be performed through a machine learning model. Compared to geometric analysis, a machine learning model does not rely on fixed rules but learns the features of sensitive regions from a large amount of data for recognition.

For example, a convolutional neural network (CNN) may be used to render the three-dimensional model into two-dimensional images from multiple perspectives, and then recognize features like recognizing cats and dogs. Alternatively, a graph convolutional network (GCN) may be used to directly treat the three-dimensional mesh as a graph structure (vertices are nodes, edges are connections) and learn the relationships between vertices and edges. PointNet++ may also be used to directly process three-dimensional point cloud data and learn local and global features of points. A segmentation model (e.g., a 3D variant of U-Net) may be used to label each vertex or face on the model, such as "assembly surface", "non-assembly surface". Alternatively, a decoder-only large model or a pre-trained large model, which has more parameters than ordinary machine learning models, may be used. The three-dimensional model may be directly input into the large model or the pre-trained large model to obtain one or more sensitive regions of the three-dimensional model. It can be understood that the trained machine learning model is obtained by training on a large amount of labeled data, or by fine-tuning a pre-trained machine learning model with a small amount of labeled data. In an embodiment, mesh data of the three-dimensional model may be input into a trained machine learning model to directly obtain identification results on the surface of the three-dimensional model. In terms of visualization, after obtaining labels for each mesh on the surface of the three-dimensional model through the trained machine learning model, different colors may be used to display different labels for intuitive distinction, for example, using a red label for sensitive regions and a green label for non-sensitive regions.

In some embodiments, to improve the accuracy of sensitive region identification of the model, a combination of geometric analysis and machine learning analysis is used for identification. Through the combination of geometric analysis (curvature, normal, boundary acute angle, etc.) and machine learning analysis, automatic identification and classification of sensitive regions of the model are achieved.

In the method provided by the above embodiments, by applying a larger enlargement spacing to concave sensitive regions, it is possible to effectively prevent a protruding portion of one model from becoming embedded in a concave portion of another model during the printing process, thereby preventing models from getting stuck during printing and reducing the risk of physical collision. Typically, when printing using a capsule printer, supports connected to the build platform are generated on portions of the surfaces of the models to support the three-dimensional manufacturing of the models in the printing space. When multiple models are stacked three-dimensionally in the printing space, supports may touch sensitive regions of models. For example, a support generated for an upper model may touch a sensitive region of a lower model. Therefore, by providing a larger enlargement spacing for sensitive regions, the possibility of supports touching is avoided.

Combining all the above embodiments, a three-dimensional placement method with free spacing is provided, suitable for printing dental models, achieving stacking functionality in three-dimensional space. The method includes:
acquiring multiple three-dimensional models; acquiring a first spacing, where the first spacing is a minimum required spacing in a horizontal direction of a model space between any two of the multiple three-dimensional models; acquiring a second spacing, where the second spacing is a minimum required spacing in a printing direction of the model space between any two of the multiple three-dimensional models;
identifying one or more sensitive regions of the multiple three-dimensional models;
performing a first enlargement on a surface of each of the multiple three-dimensional models in the horizontal direction based on the first spacing, and performing a second enlargement on the surface of each of the multiple three-dimensional models in the printing direction and a direction opposite to the printing direction based on the second spacing; in the one or more sensitive regions, performing the first enlargement with a spacing larger than the first spacing and/or performing the second enlargement with a spacing larger than the second spacing;
constructing an optimization objective and determining a constraint condition based on the first spacing and the second spacing, where the optimization objective includes at least one of minimizing a printing height, maximizing a number of models per unit area, or reducing supports;
optimizing placement positions of the multiple enlarged three-dimensional models using a trained machine learning model based on the optimization objective and the constraint condition, and outputting placement positions of the multiple enlarged three-dimensional models in the model space; and
for each of the multiple enlarged three-dimensional models, reversing the first enlargement in the horizontal direction and reversing the second enlargement in the printing direction and the direction opposite to the printing direction, thereby obtaining placement positions of the multiple three-dimensional models in the model space.

It should be understood that although the steps in the flowcharts of the above embodiments are shown in order as indicated by arrows, these steps are not necessarily performed in the order indicated by the arrows. Unless explicitly stated herein, the execution order of these steps is not strictly limited, and they may be performed in other orders. Moreover, at least a portion of the steps in the flowcharts of the above embodiments may include multiple sub-steps or stages, which are not necessarily performed at the same time but may be performed at different times, and the execution order of these sub-steps or stages is not necessarily sequential, but may be performed alternately or in rotation with at least a portion of other steps or sub-steps of other steps.

An embodiment of the present application also provides a three-dimensional model printing method, including:
determining a placement position of the multiple three-dimensional models in the model space based on the three-dimensional model placement method according to any of the above embodiments;
generating printing data of the multiple three-dimensional models according to the placement position of the multiple three-dimensional models in the model space; and
performing printing based on the printing data.

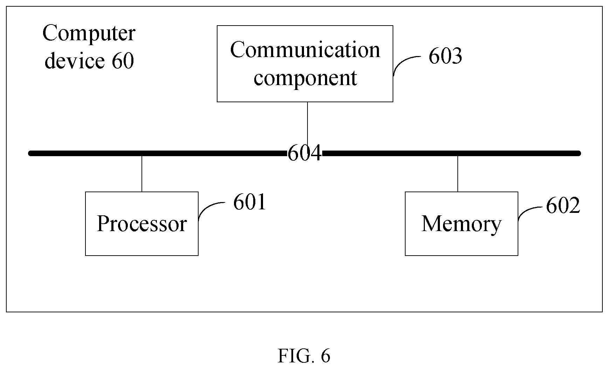

FIG. 6 is a schematic structural diagram of a computer device provided by the present application. As shown in FIG. 6, the computer device 60 provided in this embodiment includes: at least one processor 601 and a memory 602. Optionally, the device 60 further includes a communication component 603. The processor 601, the memory 602, and the communication component 603 are connected via a bus 604.

During specific implementation, the at least one processor 601 executes computer-executable instructions stored in the memory 602, causing the at least one processor 601 to perform the above methods.

For the specific implementation process of the processor 601, reference may be made to the above method embodiments, and the implementation principles and technical effects thereof are similar and will not be repeated herein.

In the above embodiments, it should be understood that the processor may be a central processing unit (CPU), or other general-purpose processors, digital signal processors (DSPs), application specific integrated circuits (ASICs), etc. A general-purpose processor may be a microprocessor, or the processor may be any conventional processor, etc. The steps of the method disclosed in the present invention may be directly embodied as being executed by a hardware processor, or executed by a combination of hardware and software modules in the processor.

The memory may include high-speed random access memory (RAM), and may also include non-volatile memory (NVM), such as at least one magnetic disk storage.

The bus may be an industry standard architecture (ISA) bus, a peripheral component interconnect (PCI) bus, or an extended industry standard architecture (EISA) bus, etc. The bus may be classified into an address bus, a data bus, a control bus, etc. For ease of representation, the bus in the accompanying drawings of the present application is not limited to only one bus or one type of bus.

The present application also provides a computer program product, including a computer program, which when executed by a processor, implements the above methods.

The present application also provides a computer-readable storage medium, where the computer-readable storage medium stores computer-executable instructions, and when the processor executes the computer-executable instructions, the above methods are implemented.

The above readable storage medium may be implemented by any type of volatile or non-volatile storage device or combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk. The readable storage medium may be any available medium that can be accessed by a general-purpose or special-purpose computer.

An example readable storage medium is coupled to the processor, enabling the processor to read information from the readable storage medium and write information to the readable storage medium. Of course, the readable storage medium may also be an integral part of the processor. The processor and the readable storage medium may be located in an application specific integrated circuit (ASIC). Of course, the processor and the readable storage medium may also exist as discrete components in the device.

The division of units is merely a logical function division, and there may be other division methods in actual implementation. For example, multiple units or components may be combined or integrated into another system, or some features may be ignored or not executed. In addition, the mutual coupling or direct coupling or communication connections shown or discussed may be indirect couplings or communication connections through some interfaces, devices, or units, which may be electrical, mechanical, or other forms.

Units described as separate components may or may not be physically separate, and components displayed as units may or may not be physical units, i.e., they may be located in one place or distributed over multiple network units. Some or all of the units may be selected according to actual needs to achieve the objectives of the solutions of the embodiments.

In addition, each functional unit in each embodiment of the present invention may be integrated into one processing unit, or each unit may exist physically alone, or two or more units may be integrated into one unit.

If the functions are implemented in the form of software functional units and sold or used as independent products, they may be stored in a computer-readable storage medium. Based on such understanding, the essential part of the technical solution of the present invention, or the part that contributes to the prior art, or part of the technical solution, may be embodied in the form of a software product. The computer software product is stored in a storage medium, and includes several instructions for causing a computer device (which may be a personal computer, a server, or a network device, etc.) to perform all or part of the steps of the methods of various embodiments of the present invention. The aforementioned storage medium includes: a USB flash drive, a removable hard disk, a read-only memory (ROM), a random access memory (RAM), a magnetic disk, or an optical disk, and other media that can store program code.

It will be understood by those of ordinary skill in the art that all or part of the steps of implementing the above method embodiments may be accomplished by program instructions and related hardware. The aforementioned program may be stored in a computer-readable storage medium. When executed, the program performs the steps of the above method embodiments; and the aforementioned storage medium includes: a ROM, a RAM, a magnetic disk, or an optical disk, and other media that can store program code.

Finally, it should be noted that: after considering the specification and practicing the application disclosed herein, those skilled in the art will readily conceive of other embodiments of the present application. The present application is intended to cover any variations, uses, or adaptations of the present application that follow the general principles of the present application and include common knowledge or customary technical means in the art not disclosed by the present application. The description and examples are to be considered as examples only, and the true scope and spirit of the present application are indicated by the following claims.

## Claims

1. A three-dimensional model placement method, comprising:
acquiring (101) multiple three-dimensional models;
acquiring (102) a first spacing, wherein the first spacing is a minimum required spacing in a horizontal direction of a model space between any two of the multiple three-dimensional models;
performing a first enlargement on a surface of each of the multiple three-dimensional models in the horizontal direction based on an enlargement amount determined by the first spacing;
acquiring (103) a second spacing, wherein the second spacing is a minimum required spacing in a vertical direction of the model space between any two of the multiple three-dimensional models;
performing a second enlargement on the surface of each of the multiple three-dimensional models in the vertical direction based on an enlargement amount determined by the second spacing; and
adjusting (104) a position of at least one of the multiple three-dimensional models in the model space based on a collision relationship between the enlarged multiple three-dimensional models.

2. The method according to claim 1, wherein the first enlargement is performed based on a half of the first spacing, and the second enlargement is performed based on a half of the second spacing.

3. The method according to claim 1 or 2, wherein the model space is defined by a printing space of the multiple three-dimensional models.

4. The method according to any one of claims 1-3, wherein adjusting (104) the position of at least one of the multiple three-dimensional models in the model space based on the collision relationship between the enlarged multiple three-dimensional models comprises:
determining multiple colliding three-dimensional models having a collision relationship; and
adjusting a position of at least one of the multiple colliding three-dimensional models in the model space to eliminate the collision relationship.

5. The method according to claim any one of claims 1-4, further comprising:
acquiring (401) a first placement position of the adjusted multiple three-dimensional models in the model space;
constructing (402) an optimization objective, wherein the optimization objective comprises at least one of minimizing a printing height, maximizing a number of models per unit area, or reducing supports;
determining a constraint condition based on the first spacing and the second spacing; and
optimizing (403) the first placement position using a machine learning model based on the optimization objective and the constraint condition, and outputting a second placement position of the multiple three-dimensional models in the model space.

6. The method according to any one of claims 1-5, further comprising:
identifying (501) one or more sensitive regions of the multiple three-dimensional models; and
performing (502), in the one or more sensitive regions, the first enlargement with a spacing larger than the first spacing and/or the second enlargement with a spacing larger than the second spacing.

7. The method according to claim 6, wherein identifying (501) the one or more sensitive regions of the multiple three-dimensional models comprises:
extracting a geometric parameter of the multiple three-dimensional models from mesh data of the multiple three-dimensional models; and
identifying the one or more sensitive regions of the multiple three-dimensional models based on the geometric parameter, wherein the geometric parameter comprise at least one of curvature, normal variation rate, or boundary acute angle.

8. The method according to claim 6, wherein identifying (501) the one or more sensitive regions of the multiple three-dimensional models comprises:
identifying the sensitive regions of the multiple three-dimensional models using a machine learning model based on mesh data of the multiple three-dimensional models.

9. The method according to any one of claims 1-8, wherein the second spacing is determined based on a support structure and a layer thickness during printing of the three-dimensional models, and a post-printing demolding force.

10. The method according to any one of claims 1-9, wherein the first spacing and the second spacing are different, and/or, the first spacing is less than the second spacing.

11. The method according to any one of claims 1-10, further comprising:
after the adjusting, for each of the multiple three-dimensional models, reversing the first enlargement in the horizontal direction, and reversing the second enlargement in the vertical direction.

12. The method according to any one of claims 1-11, further comprising:
adjusting positions of enlarged three-dimensional models having no collision relationship to be close to positions where the collision relationship exists.

13. A three-dimensional model printing method, comprising:
determining a placement position of the multiple three-dimensional models in the model space based on the method according to any one of claims 1-12;
generating printing data of the multiple three-dimensional models according to the placement position of the multiple three-dimensional models in the model space; and
performing printing based on the printing data.

14. A computer device (60), comprising:
a processor (601);
a memory (602) communicatively connected to the processor (601), the memory (602) storing computer-executable instructions;
the processor (601) executing the computer-executable instructions stored in the memory (602) to implement the method according to any one of claims 1-13.

15. A computer-readable storage medium, wherein the computer-readable storage medium stores computer-executable instructions, and the computer-executable instructions are executed by a processor to cause the processor to perform the method according to any one of claims 1-13.
